(19) Europäisches Patentamt
European Patent Office
Office européen des brevets

(11) **EP 3 016 043 A1**

(12) **EUROPEAN PATENT APPLICATION**

(43) Date of publication:
**04.05.2016 Bulletin 2016/18**

(51) Int Cl.:
**G06Q 10/06** *(2012.01)*

(21) Application number: **15176088.1**

(22) Date of filing: **09.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **31.10.2014 CN 201410602700**

(71) Applicant: **Xiaomi Inc.
Beijing 100085 (CN)**

(72) Inventors:
• YANG, Yun
  100085 BEIJING (CN)
• WANG, Yang
  100085 BEIJING (CN)
• LI, Feiyun
  100085 BEIJING (CN)

(74) Representative: **Underwood, Nicolas Patrick et al
Cabinet Beau de Loménie
158, rue de l'Université
75340 Paris Cedex 07 (FR)**

(54) **METHOD AND APPARATUS FOR CALCULATING SMART INDICATOR**

(57)    The present disclosure relates to a method and apparatus for calculating a smart indicator. The method includes: acquiring (101) association information of smart indices; calculating (102) smart indices respectively according to the acquired association information of smart indices; and obtaining (103) the smart indicator by a weight calculation according to the smart indices and the number of devices.

Acquire association information of smart indices — 101

Calculate corresponding smart indices respectively according to the acquired association information of the smart indices — 102

Obtain the smart indicator by a weight calculation according to the smart indices and the number of devices — 103

**FIG.1**

EP 3 016 043 A1

**Description**

**TECHNICAL FIELD**

The present disclosure relates to the field of smart homes, and more particularly, to a method and apparatus for calculating a smart indicator.

**BACKGROUND**

Smart home, based on dwellings, is a network-based smart home control system which integrates an automation control system, a computer network system, and network communication technologies. The smart home improves safety, convenience, comfort, and artistry of homes, and achieves an environmentally-friendly and energy-saving living environment.
In the prior art, the smart home is connected to a smart home system via a configured touch screen, speech recognition-based control, wireless remote control or the like. the smart home configures household appliances, performs scenario operations, such that a plurality of appliances are linked and that the household appliances in the smart home are capable of communicating with each other. In the above process, however, a user may not acquire smart indicators such as safety degree of his or her household appliance, activity degree of the user, and linkage of the appliances.

**SUMMARY**

To solve the problem in the prior art, the present disclosure provides a method and apparatus for calculating a smart indicator.
According to a first aspect of embodiments of the present disclosure, a method for calculating a smart indicator is provided. The method comprises the steps of:

acquiring association information of smart indices; the association information including: usage information of a safety device, login information of a smart home APP, configuration information of a smart scenario, and the number of devices;
calculating smart indices respectively according to the acquired association information of smart indices; the smart indices including: a safety index, an activity index, and a linkage index; and
obtaining the smart indicator by a weight calculation according to the smart indices and the number of devices.

Optionally, the step of acquiring association information of smart indices includes the step of:

acquiring usage information of a safety device corresponding to the safety index, login information of a smart home APP corresponding to the activity index, and configuration information of a smart scenario corresponding to the linkage index; and
the step of calculating smart indices respectively according to the acquired association information of smart indices comprises the steps of:
calculating a safety index according to the usage information of a safety device, calculating an activity index according to the login information of a smart home APP, and calculating a linkage index according to the configuration information of a smart scenario.

Optionally, the step of acquiring usage information of a safety device corresponding to the safety index comprises the step of:

acquiring the total number n of types of safety devices corresponding to a safety index $A_1$, and the number $N_i$ of safety devices of a corresponding type i; and
the step of calculating a safety index according to the usage information of a safety device comprises the step of :

obtaining the safety index $A_1$ according to a formula $A_1 = \sum_{i=1}^{n} a_i * \log(N_i + 1)$ o; wherein, $A_1$ indicates a safety index, n indicates the total number of types of the safety devices, i indicates the safety devices of the type i, $a_i$ indicates a weight of the safety devices of the type i, $\sum_{i=1}^{n} a_i = 100,$ and $N_i$ indicates the number of safety devices of the type i.

Optionally, when the number $N_i$ of safety devices of the type i is greater than a maximum number $P_{max}$ of the safety devices, a value of $N_i$ is set to $P_{max}$.

Optionally, the step of acquiring login information of a smart home APP corresponding to the activity index comprises the step of:

acquiring an activity cycle T corresponding to an activity index $A_2$, and login times $M_j$ of a user on the j<sup>th</sup> day within the activity cycle T, and calculating a difference $Q_j$ of days between the j<sup>th</sup> day and a current date; and
the step of calculating an activity index according to the login information of a smart home APP comprises:

obtaining the activity index $A_2$ according to a formula $A_2 = \sum_{j=1}^{T} \log(M_j + 1) * (T - Q_j)$ wherein, $A_2$ indicates an

activity index, T indicates an activity cycle, $M_j$ indicates login times of a user on the j<sup>th</sup> day within the activity cycle T, j indicates the j<sup>th</sup> day within the activity cycle, and $Q_j$ indicates a difference of days between the j<sup>th</sup> day and a current date within the activity cycle T.

Optionally, the step of acquiring configuration information of a smart scenario corresponding to the linkage index comprises the step of:

acquiring the number L of smart scenarios corresponding to a linkage index $A_3$; and
the step of calculating a linkage index according to the configuration information of a smart scenario comprises the step of:

obtaining the linkage index $A_3$ according to a formula $A_3 = b*\log(L+1)$ o; wherein, $A_3$ indicates a linkage index, b indicates a weight of a smart scenario, and L indicates the number of smart scenarios.

Optionally, the step of obtaining the smart indicator by a weight calculation according to the smart indices comprises the step of :

obtaining the smart indicator according to a formula $s = c_1A_1 + c_2A_2 + c_3A_3 + c_4\log(R+1)$; wherein, S indicates a smart indicator, $A_1$ indicates a safety index, $c_1$ indicates a weight of the safety index $A_1$, $A_2$ indicates an activity index, $c_2$ indicates a weight of the activity index $A_2$, $A_3$ indicates a linkage index, $c_3$ indicates a weight of the linkage index $A_3$, R indicates the number of devices, $c_4$ indicates a weight of the number R of devices, $\sum_{k=1}^{4} C_k = 1,$ and k = 1, 2, 3, 4.

Optionally, the method further comprises the step of:

displaying the safety index, the activity index, the linkage index, and the smart indicator.

According to a second aspect of embodiments of the present disclosure, an apparatus for calculating a smart indicator is provided. The apparatus comprises:

an acquiring module, configured to acquire association information of smart indices; the association information including: usage information of a safety device, login information of a smart home APP, configuration information of a smart scenario, and the number of devices;
a first calculating module, configured to calculate smart indices respectively according to the association information of smart indices acquired by the acquiring module; the smart indices including: a safety index, an activity index, and a linkage index; and
a second calculating module, configured to obtain the smart indicator by a weight calculation according to the smart indices calculated by the first calculating module and the number of devices.

Optionally, the acquiring module is configured to acquire usage information of a safety device corresponding to the safety index, login information of a smart home APP corresponding to the activity index, and configuration information of a smart scenario corresponding to the linkage index; and the first calculating module is configured to calculate a safety index according to the usage information of a safety device, calculate an activity index according to the login information of a smart home APP, and calculate a linkage index according to the configuration information of a smart scenario.

Optionally, the acquiring module is specifically configured to acquire the total number n of types of safety devices corresponding to a safety index $A_1$, and the number $N_i$ of safety devices of a corresponding type i; and

the first calculating module is specifically configured to obtain the safety index $A_1$ according to a formula

$$A_1 = \sum_{i=1}^{n} a_i * \log(N_i + 1)$$ ; wherein, $A_1$ indicates a safety index, n indicates the total number of types of the safety devices, i indicates the safety devices of the type i, $a_i$ indicates a weight of the safety devices of the type i,

$$\sum_{i=1}^{n} a_i = 100,$$ and $N_i$ indicates the number of safety devices of the type i.

Optionally, when the number $N_i$ of safety devices of the type i is greater than a maximum number $P_{max}$ of the safety devices, a value of $N_i$ is set to $P_{max}$.

Optionally, the acquiring module is specifically configured to acquire an activity cycle T corresponding to an activity index $A_2$, and login times $M_j$ of a user on the j$^{th}$ day within the activity cycle T, and calculate a difference $Q_j$ of days between the j$^{th}$ day and a current date; and

the first calculating module is specifically configured to obtain the activity index $A_2$ according to a formula

$$A_2 = \sum_{j=1}^{T} \log(M_j + 1) * (T - Q_j)$$ ; wherein, $A_2$ indicates an activity index, T indicates an activity cycle, $M_j$ indicates login times of a user on the j$^{th}$ day within the activity cycle T, j indicates the j$^{th}$ day within the activity cycle, and $Q_j$ indicates a difference of days between the j$^{th}$ day and a current date within the activity cycle T.

Optionally, the acquiring module is specifically configured to acquire the number L of smart scenarios corresponding to a linkage index $A_3$ ; and

the first calculating module is specifically configured to obtain the linkage index $A_3$ according to a formula $A_3 = b * \log(L+1)$ ; wherein, $A_3$ indicates a linkage index, b indicates a weight of a smart scenario, and L indicates the number of smart scenarios.

Optionally, the second calculating module is configured to obtain the smart indicator according to a formula $s = c_1 A_1 + c_2 A_2 + c_3 A_3 + c_4 \log(R+1)$; wherein, S indicates a smart indicator, $A_1$ indicates a safety index, $c_1$ indicates a weight of the safety index $A_1$, $A_2$ indicates an activity index, $c_2$ indicates a weight of the activity index $A_2$, $A_3$ indicates a linkage index, $c_3$ indicates a weight of the linkage index $A_3$, R indicates the number of devices, $c_4$ indicates a weight of the number R of devices, $$\sum_{k=1}^{4} c_k = 1,$$ and k = 1,2,3,4.

Optionally, the apparatus further comprises:

a display module, configured to display the safety index, the activity index, the linkage index, and the smart indicator.

According to a third aspect of embodiments of the present disclosure, an apparatus for calculating a smart indicator is provided. The apparatus comprises:

a processor; and
a memory for storing instructions executable by the processor;
wherein the processor is configured to:
acquire association information of smart indices;
calculate smart indices respectively according to the acquired association information of smart indices; and
obtain the smart indicator by a weight calculation according to the smart indices and the number of devices.

A computer program is provided according to a fourth aspect of the present disclosure. The computer program performs the steps of the method for calculating a smart indicator when this program is executed by a computer.

This program can use any programming language and take the form of source code, object code or a code intermediate between source code and object code, such as a partially compiled form, or any other desirable form.

The invention is also directed to a computer-readable information medium containing instructions of the computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided in the embodiments of the present disclosure may achieve the following beneficial effects:

Association information of smart indices is acquired, smart indices are calculated respectively according to the acquired association information, and a smart indicator is obtained by a weight calculation according to the smart indices and the number of devices. As such, a user may acquire a smartness degree of his or her home, and sense of participation of the user is improved, thereby promoting user's enthusiasm, and thus enhancing home smartness degree.

It shall be appreciated that the above general description and the detailed description hereinafter are only illustrative, but not for limiting the present disclosure.

## BRIEF DESCRIPTION OF THE DRAWINGS

The accompanying drawings herein, which are incorporated into and constitute a part of the specification, illustrate embodiments consistent with the present disclosure, and together with the description, serve to explain the principles of the present disclosure.

FIG. 1 is a flowchart illustrating a method for calculating a smart indicator according to an exemplary embodiment of the present disclosure;

FIG. 2 is a flowchart illustrating a method for calculating a smart indicator according to another exemplary embodiment of the present disclosure;

FIG. 3 is a schematic diagram illustrating a display interface of a smart indicator according to an exemplary embodiment of the present disclosure;

FIG. 4 is a block diagram illustrating an apparatus for calculating a smart indicator according to an exemplary embodiment of the present disclosure;

FIG. 5 is a block diagram illustrating an apparatus for calculating a smart indicator according to another exemplary embodiment of the present disclosure; and

FIG. 6 is a block diagram illustrating an apparatus for calculating a smart indicator according to an exemplary embodiment of the present disclosure.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

It should be noted that in all formulas containing a logarithm function described in the present disclosure, the base of the logarithm function is a real number whose value is greater than 1 and may be adaptively selected as required, but the base is omitted from expression for sake of clarity and concision. At least in some of the formulas described hereinafter, the base of the logarithm function is "e", whose value is approximately equal to 2.71828.

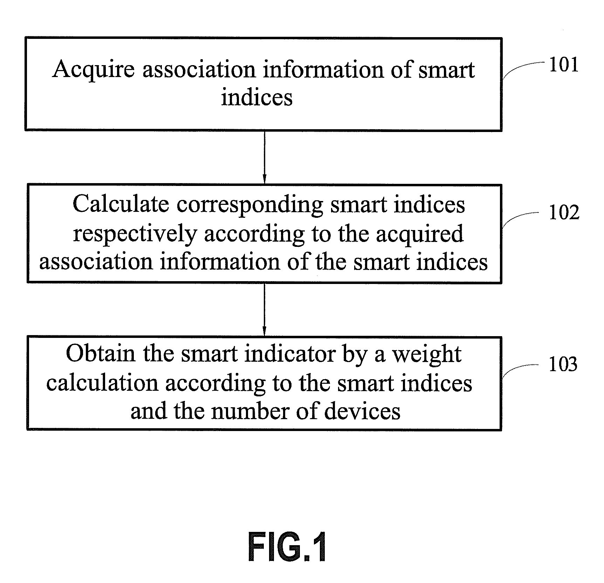

FIG. 1 is a flowchart illustrating a method for calculating a smart indicator according to an exemplary embodiment of the present disclosure. The method for calculating a smart indicator may be applied in a terminal. As illustrated in FIG. 1, the method for calculating a smart indicator includes the following steps.

In step 101, association information of smart indices is acquired.

The association information includes: usage information of a safety device, login information of a smart home APP (for example, a software application designed to run on smartphones or other devices), configuration information of a smart scenario, and the number of devices.

In step 102, smart indices are calculated respectively according to the acquired association information of smart indices; wherein the smart indices include: a safety index, an activity index, and a linkage index.

In step 103, the smart indicator is obtained by a weight calculation according to the smart indices and the number of devices. In this document, a "weight calculation" refers to a calculation relative to a weight of a smart index.

In conclusion, with the method for calculating a smart indicator according to the present disclosure, association information of smart indices is acquired, smart indices are calculated respectively according to the acquired association information, and a smart indicator is obtained by a weight calculation according to the calculated smart indices and the number of devices (for example, household appliances in a smart home). As such, a user may be aware of the smartness degree of his or her home; the sense of participation of the user is improved, thus the user's enthusiasm is promoted, and home smartness degree is enhanced.

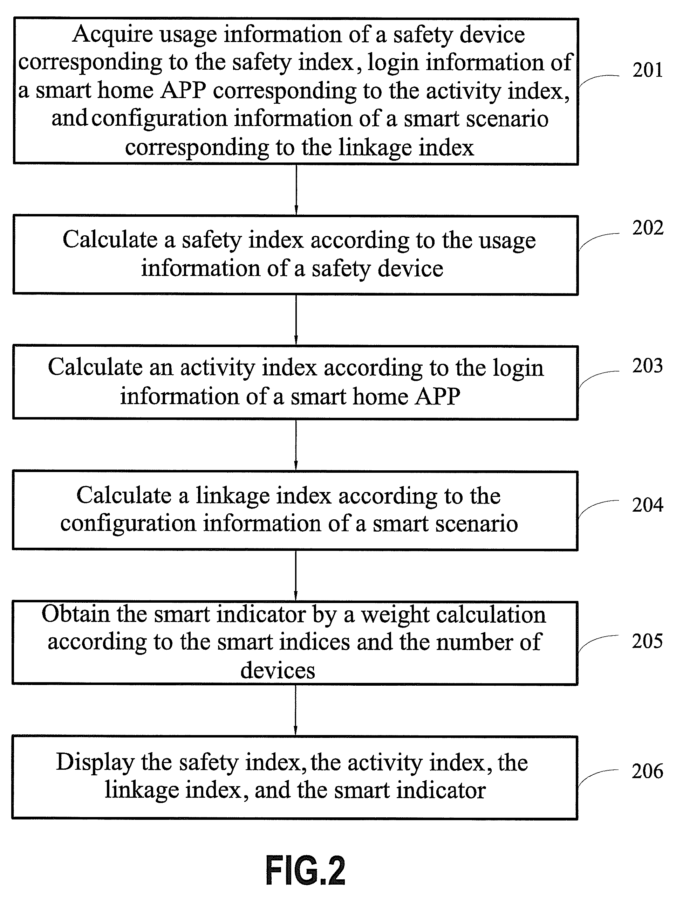

FIG. 2 is a flowchart illustrating a method for calculating a smart indicator according to another exemplary embodiment of the present disclosure. The method for calculating a smart indicator may be applied in a terminal. As illustrated in FIG. 2, the method for calculating a smart indicator includes the following steps.

In step 201, usage information of a safety device corresponding to the safety index, login information of a smart home APP corresponding to the activity index, and configuration information of a smart scenario corresponding to the linkage index are acquired.

By way of example without limitation, the safety index refers to an indicator reflecting safety of a smart device; the usage information of a safety device refers to usage details of a safety device for monitoring latent safety risks in a smart home, and mainly includes: the number of used devices and the types thereof. In this case, the step of acquiring usage information of a safety device corresponding to a safety index includes: acquiring the types of the safety devices, and the number of safety devices of each type. For example, the acquired safety devices include: a safety camera, a door magnetic alarm, an audible and visual alarm, a gas sensor, and a smoke sensor. However, the safety devices are not limited to those listed herein.

By way of example without limitation, the activity index refers to an indicator reflecting an APP usage activity of a smart device; the login information of a smart home APP refers to a key indicator for estimating user dependency on a smart home APP, and is mainly determined according to the login times and login duration of the user. In this case, the step of acquiring login information of a smart home APP corresponding to an activity index includes: acquiring an activity cycle T, the login times of the user each day within the activity cycle T, and a difference of days between a login date and a current date, wherein the activity cycle T is predetermined. For example, a predetermined activity cycle is 15 days, the times of logging into the smart home APP each day within 15 days is acquired. For another example, it is supposed that today is October 31, 2014, then using today as a deadline date for estimation, the times of logging into the smart home APP each day within a cycle (ex. a cycle from October 16, 2014 to October 31, 2014) is acquired, and a difference of days between each login date and the deadline date is calculated. It should be noted that, since the greater the calculated difference of days is, the less an impact on the estimation of the activity of the user is..

By way of example without limitation, the linkage index refers to an indicator reflecting an association relation between smart devices; the configuration information of a smart scenario refers to correspondence information between a preset action and performing a corresponding operation. In this case, the step of acquiring configuration information of a smart scenario corresponding to a linkage index includes: acquiring the number of smart scenarios, wherein a smart scenario refers to a user-predetermined behavior for triggering and performing a corresponding operation after detection or inputting of the user-predetermined behavior. For example, when it is detected whether the user's mobile phone is connected to the WiFi at home, the home door is automatically opened. Still for example, the user enables a home camera for monitoring via a smart home APP on a smart phone, and checks the scene picked up by the home camera.

In step 202, a safety index is calculated according to the usage information of a safety device.

In this embodiment, a safety index $A_1$ is obtained according to a formula $A_1 = \sum_{i=1}^{n} a_i * \log(N_i + 1)$ of the safety index $A_1$.

In the above formula, $A_1$ indicates a safety index, n indicates the total number of types of the safety devices, i indicates the safety devices of the type i, $a_i$ indicates a weight of the safety devices of the type i, $\sum_{i=1}^{n} a_i = 100$, and $N_i$ indicates the number of safety devices of the type i.

For example, there are totally five types of safety devices, and the acquired five types of safety devices and the number of such devices are as follows. First type: two safety cameras; second type: one door magnetic alarm; third type: five audible and visual alarms; fourth type: three gas sensors; and fifth type: two smoke sensors; weights of the five types of safety devices are respectively 30, 20, 20, 15, and 15. The above values are taken into the above safety index calculation formula to obtain:

$$A_1 = 30 * \log(2+1) + 20 * \log(1+1) + 20 * \log(5+1) + 15 * \log(3+1) + 15 * \log(2+1) = 52;$$

Where, when the number $N_i$ of safety devices of the type i is greater than a maximum number $P_{max}$ of the safety devices, a value of $N_i$ is set to $P_{max}$.

For example, when $P_{max}$ =4, the above values are taken into the safety index calculation formula to obtain:

$$A_1 = 30 * \log(2+1) + 20 * \log(1+1) + 20 * \log(4+1) + 15 * \log(3+1) + 15 * \log(2+1) = 50;$$

In addition, it should be noted that, when the obtained safety index is greater than a predetermined maximum threshold, the safety index is set to the maximum threshold.

In step 203, an activity index is calculated according to the login information of a smart home APP.

In this embodiment, an activity index $A_2$ is obtained according to a formula

$$A_2 = \sum_{j=1}^{T} \log(M_j + 1) * (T - Q_j)$$ of the activity index $A_2$.

In the above formula, $A_2$ indicates an activity index, T indicates an activity cycle, $M_j$ indicates login times of a user on the jth day within the activity cycle T, j indicates the jth day within the activity cycle, and $Q_j$ indicates a difference of days within the activity cycle T between the jth day and a current date. For example, the activity cycle is five days. Within these five days, on the first day, the difference of days is four days away from the current date, and the login times is 15; on the second day, the difference of days is three days away from the current date, and the login times is 20; on the third day, the difference of days is two days away from the current date, and the login times is 50; on the fourth day, the difference of days is one day away from the current date, and the login times is 21; on the fifth day, the difference of days is zero day away from the current date, and the login times is 24. The above values are taken into the above activity index calculation formula to obtain:

$$A_2 = \log(15+1)*(5-4) + \log(20+1)*(5-3) + \log(50+1)*(5-2) + \log(21+1)*(5-1) + \log(24+1)*(5-0) = 9.$$

In step 204, a linkage index is calculated according to the configuration information of a smart scenario.

In this embodiment, a linkage index $A_3$ is obtained according to a formula $A_3 = b*\log(L+1)$ of the linkage index $A_3$.

In the above formula, $A_3$ indicates a linkage index, b indicates a weight of the smart scenarios, and L indicates the number of smart scenarios.

For example, a weight of a smart scenario is 20, and the number of smart scenarios is 9999. The above values are taken into the above linkage index calculation formula to obtain $A_3 = 20*\log(9999+1) = 60$.

It should be noted that steps 202 to 204 are subjected to no definite sequence, and may be performed in any sequence.

In step 205, a smart indicator is obtained by a weight calculation according to the smart indices and the number of devices.

In this embodiment, a smart indicator S is obtained according to a formula $s = c_1 A_1 + c_2 A_2 + c_3 A_3 + c_4 \log(R+1)$ of the smart indicator S.

In the above formula, S indicates a smart indicator, $A_1$ indicates a safety index, $c_1$ indicates a weight of the safety index $A_1$, $A_2$ indicates an activity index, $c_2$ indicates a weight of the activity index $A_2$, $A_3$ indicates a linkage index, $c_3$ indicates a weight of the linkage index $A_3$, R indicates the number of devices, $c_4$ indicates a weight of the number R of devices, $\sum_{k=1}^{4} c_k = 1$, and k=1,2,3,4.

For example, the safety index $A_1$=50, the weight of the safety index $c_1$=0.5, the activity index $A_2$=9, the weight of the activity index $c_2$=0.3, the linkage index $A_3$=60, the weight of the linkage index $c_3$=0.3, the number of devices R=99, and the weight of the number of devices $c_4$=0.1. The above values are taken into the above smart indicator calculation formula to obtain: S=38.

In step 206, the safety index, the activity index, the linkage index, and the smart indicator are displayed.

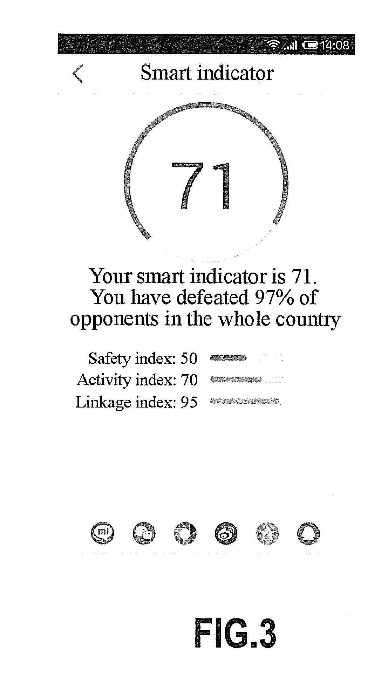

As illustrated in FIG. 3, the smart indicator, the safety index, the activity index, and the linkage index are displayed.

In addition, with reference to the above embodiments, smart indicators of other users may be acquired from a cloud database, and a current smartness ranking of the user may be calculated, thereby further improving sense of participation of the user.

In conclusion, with the method for calculating a smart indicator according to the present disclosure, usage information of a safety device corresponding to a safety index, login information of a smart home APP corresponding to an activity index, and configuration information of a smart scenario corresponding to a linkage index are acquired, a safety index is calculated according to the usage information of a safety device, an activity index is calculated according to the login information of a smart home APP, a linkage index is calculated according to the configuration information of a smart scenario, and a smart indicator is obtained by a weight calculation according to the smart indicator and the number of devices. As such, a user may acquire a smartness degree of his or her home, and sense of participation of the user is improved, thereby promoting user's enthusiasm, and thus enhancing home smartness degree.

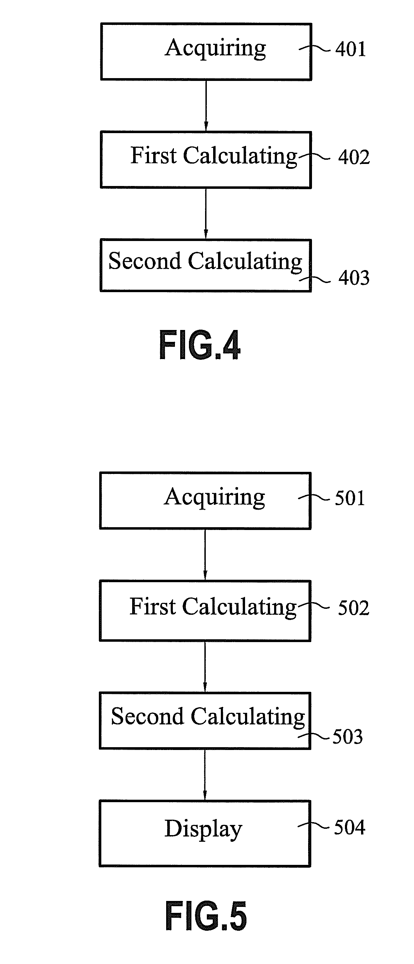

FIG. 4 is a block diagram illustrating an apparatus for calculating a smart indicator according to an exemplary embodiment of the present disclosure. As illustrated in FIG. 4, the apparatus includes:

an acquiring module 401, configured to acquire association information of smart indices; the association information including: usage information of a safety device, login information of a smart home APP, configuration information of a smart scenario, and the number of devices;

a first calculating module 402, configured to calculate smart indices respectively according to the association information of smart indices acquired by the acquiring module; the smart indices including: a safety index, an activity index, and a linkage index; and

a second calculating module 403, configured to obtain a smart indicator by a weight calculation according to the smart indices calculated by the first calculating module and the number of devices.

The acquiring module 401 is configured to acquire usage information of a safety device corresponding to the safety index, login information of a smart home APP corresponding to the activity index, and configuration information of a smart scenario corresponding to the linkage index; and the first calculating module 402 is configured to calculate a safety index according to the usage information of a safety device, calculate an activity index according to the login information of a smart home APP, and calculate a linkage index according to the configuration information of a smart scenario.

In the calculation of a safety index, the acquiring module 401 is specifically configured to acquire the total number n of types of safety devices corresponding to a safety index $A_1$, and the number $N_i$ of safety devices of a corresponding type i; and the first calculating module 402 is specifically configured to obtain the safety index $A_1$ according to a formula $A_1 = \sum_{i=1}^{n} a_i * \log(N_i + 1)$ of the safety index $A_1$; wherein in the formula, $A_1$ indicates a safety index, n indicates the total number of types of the safety devices, i indicates the safety devices of the type i, $a_i$ indicates a weight of the safety devices of the type i, $\sum_{i=1}^{n} a_i = 100,$ and $N_i$ indicates the number of safety devices of the type i.

When the number $N_i$ of safety devices of the type i is greater than a maximum number $P_{max}$ of the safety devices, a value of $N_i$ is set to $P_{max}$.

In the calculation of an activity index, the acquiring module 401 is specifically configured to acquire an activity cycle T corresponding to an activity index $A_2$, and login times $M_j$ of a user on the $j^{th}$ day within the activity cycle T, and calculate a difference $Q_j$ of days between the $j^{th}$ day and a current date within the activity cycle T; and the first calculating module 402 is specifically configured to obtain the activity index $A_2$ according to a formula

$$A_2 = \sum_{j=1}^{T} \log(M_j + 1) * (T - Q_j)$$ of the activity index $A_2$; wherein in the formula, $A_2$ indicates an activity index, T indicates an activity cycle, $M_j$ indicates login times of a user on the $j^{th}$ day within the activity cycle T, j indicates the $j^{th}$ day within the activity cycle, and $Q_j$ indicates a difference of days between the $j^{th}$ day and a current date within the activity cycle T.

In the calculation of a linkage index, the acquiring module 401 is specifically configured to acquire the number L of smart scenarios corresponding to a linkage index $A_3$; and the first calculating module 402 is specifically configured to obtain the linkage index $A_3$ according to a formula $A_3 = b * \log(L + 1)$ of the linkage index $A_3$; wherein in the formula, $A_3$ indicates a linkage index, b indicates a weight of a smart scenario, and L indicates the number of smart scenarios.

The second calculating module 403 is configured to obtain the smart indicator S according to a formula $s=c_1A_1+c_2A_2+c_3A_3+c_4\log(R+1)$ of the smart indicator S; wherein in the formula, S indicates a smart indicator, $A_1$ indicates a safety index, $c_1$ indicates a weight of the safety index $A_1$, $A_2$ indicates an activity index, $c_2$ indicates a weight of the activity index $A_2$, $A_3$ indicates a linkage index, $c_3$ indicates a weight of the linkage index $A_3$, R indicates the number of devices, $c_4$ indicates a weight of the number R of devices, $\sum_{k=1}^{4} C_k = 1$, and k = 1, 2, 3, 4.

With the apparatus for calculating a smart indicator according to the present disclosure, association information of smart indices is acquired, smart indices are calculated respectively according to the acquired association information, and a smart indicator is obtained by a weight calculation according to the smart indices and the number of devices. As such, a user may acquire a smartness degree of his or her home, and sense of participation of the user is improved, thereby promoting user's enthusiasm, and thus enhancing home smartness degree.

With reference to the above apparatus, FIG. 5 is a block diagram illustrating an apparatus for calculating a smart indicator according to an exemplary embodiment of the present disclosure. As illustrated in FIG. 5, the apparatus includes:

an acquiring module 501, configured to acquire association information of smart indices; the association information including: usage information of a safety device, login information of a smart home APP, configuration information of a smart scenario, and the number of devices;

a first calculating module 502, configured to calculate smart indices respectively according to the association information of smart indices acquired by the acquiring module; the smart indices including: a safety index, an activity index, and a linkage index;

a second calculating module 503, configured to obtain the smart indicator by a weight calculation according to the smart indices calculated by the first calculating module and the number of devices; and

a display module 504, configured to display the safety index, the activity index, the linkage index, and the smart indicator.

With the apparatus for calculating a smart indicator according to the present disclosure, association information of smart indices is acquired, smart indices are calculated respectively according to the acquired association information, a smart indicator is obtained by a weight calculation according to the smart indices and the number of devices, and the safety index, the activity index, the linkage index, and the smart indicator are displayed. As such, a user may acquire a smartness degree of his or her home, and sense of participation of the user is improved, thereby promoting user's enthusiasm, and thus enhancing home smartness degree.

With respect to the apparatuses in the above embodiments, the specific implementations of operations executed by various modules thereof have been described in detail in the embodiments illustrating the methods, which are not described herein any further.

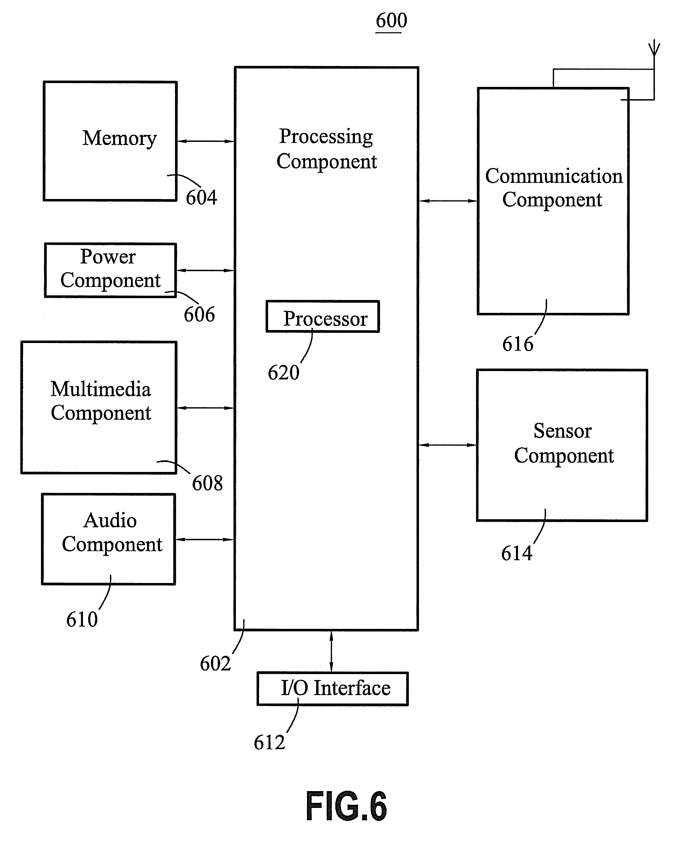

FIG. 6 is a block diagram illustrating an apparatus 600 for calculating a smart indicator according to an exemplary embodiment of the present disclosure. For example, the apparatus 600 may be a mobile phone, a computer, a digital broadcast terminal, a messaging device, a gaming console, a tablet, a medical device, an exercise equipment, a personal digital assistant, and the like.

Referring to FIG. 6, the apparatus 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the apparatus 600, such as the operations associated with display, telephone calls, data communications, camera operations, and recording operations. The processing component 602 may include one or more processors 618 to execute instructions to perform all or a part of the steps in the above-described methods. In addition, the processing component 602 may include one or more modules which facilitate the interaction between the processing component 602 and other components. For example, the processing component 602 may include a multimedia module to facilitate the interaction between the multimedia component 608 and the processing component 602.

The memory 604 is configured to store various types of data to support the operations of the apparatus 600. Examples of such data include instructions for any application or method operated on the apparatus 600, contact data, phonebook data, messages, pictures, videos, and the like. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the apparatus 600. The power component 606 may include a power management system, one or more power supplies, and other components associated with the generation, management, and distribution of power in the apparatus 600.

The multimedia component 608 includes a screen providing an output interface between the apparatus 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and/or the rear camera may receive external multimedia data while the apparatus 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone (MIC) configured to receive an external audio signal when the apparatus 600 is in an operation mode, such as a call mode, a recording mode, or a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and a peripheral interface module, such as a keyboard, a click wheel, a button, or the like. The buttons may include, but are not limited to, a home button, a volume button, a starting button, and a locking button.

The sensor component 614 includes one or more sensors to provide status assessments of various aspects of the apparatus 600. For example, the sensor component 614 may detect an open/closed status of the apparatus 600, relative positioning of components, e.g., the display and the keypad, of the apparatus 600, a change in position of the apparatus 600 or a component of the apparatus 600, a presence or absence of user contact with the apparatus 600, an orientation or an acceleration/deceleration of the apparatus 600, and a change in temperature of the apparatus 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communications, wired or wirelessly, between the apparatus 600 and other devices. The apparatus 600 may access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 604, executable by the processor 618 in the apparatus 600, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and embodiments be considered as exemplary only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

**Claims**

**1.** A method for calculating a smart indicator, **characterized in that** the method comprises steps of :

acquiring (101) association information of smart indices; the association information including: usage information of a safety device, login information of a smart home APP, configuration information of a smart scenario, and the number of devices;

calculating (102) smart indices respectively according to the acquired association information of smart indices; the smart indices including: a safety index, an activity index, and a linkage index; and

obtaining (103) the smart indicator by a weight calculation according to the smart indices and the number of devices.

2. The method according to claim 1, **characterized in that** the step of acquiring (101) association information of smart indices comprises the step of:

acquiring (201) usage information of a safety device corresponding to the safety index, login information of a smart home APP corresponding to the activity index, and configuration information of a smart scenario corresponding to the linkage index; and

the step of calculating (102) smart indices respectively according to the acquired association information of smart indices comprises the steps of:

calculating (202) a safety index according to the usage information of a safety device, calculating (203) an activity index according to the login information of a smart home APP, and calculating (204) a linkage index according to the configuration information of a smart scenario.

3. The method according to claim 2, **characterized in that** the step of acquiring (201) usage information of a safety device corresponding to the safety index comprises:

acquiring the total number n of types of safety devices corresponding to a safety index $A_1$, and the number $N_i$ of safety devices of a corresponding type i; and

the step of calculating (202) a safety index according to the usage information of a safety device comprises the step of:

obtaining the safety index $A_1$ according to a formula $A_1 = \sum_{i=1}^{n} a_i * \log(N_i + 1)$ ; wherein, $A_1$ indicates a safety index, n indicates the total number of types of the safety devices, i indicates the safety devices of the type i, $a_i$ indicates a weight of the safety devices of the type i, $\sum_{i=1}^{n} a_i = 100,$ and $N_i$ indicates the number of safety devices of the type i.

4. The method according to claim 2 or 3, **characterized in that** the step of acquiring (201) login information of a smart home APP corresponding to the activity index comprises the step of:

acquiring an activity cycle T corresponding to an activity index $A_2$, and login times $M_j$ of a user on the jth day within the activity cycle T, and calculating a difference $Q_j$ of days between the jth day and a current date; and

the step of calculating (203) an activity index according to the login information of a smart home APP comprises the step of :

obtaining the activity index $A_2$ according to a formula $A_2 = \sum_{j=1}^{T} \log(M_j + 1) * (T - Q_j)$ ; wherein, $A_2$ indicates an activity index, T indicates an activity cycle, $M_j$ indicates login times of a user on the jth day within the activity cycle T, j indicates the jth day within the activity cycle, and $Q_j$ indicates a difference of days between the jth day and a current date within the activity cycle T.

5. The method according to any one of claims 2 to 4, **characterized in that** the step of acquiring (201) configuration information of a smart scenario corresponding to the linkage index comprises the step of:

acquiring the number L of smart scenarios corresponding to a linkage index $A_3$; and

the step of calculating (204) a linkage index according to the configuration information of a smart scenario comprises the step of :

obtaining the linkage index $A_3$ according to a formula $A_3=b*log(L+1)$ of the linkage index $A_3$; wherein in the formula, $A_3$ indicates a linkage index, b indicates a weight of a smart scenario, and L indicates the number of smart scenarios.

6. The method according to any one of claims 1 to 5, **characterized in that** the step of obtaining (103) the smart indicator by a weight calculation according to the smart indices comprises the step of:

obtaining the smart indicator according to a formula $s=c_1A_1+c_2A_2+c_3A_3+c_4log(R+1)$; wherein, S indicates a smart indicator, $A_1$ indicates a safety index, $c_1$ indicates a weight of the safety index $A_1$, $A_2$ indicates an activity index, $c_2$ indicates a weight of the activity index $A_2$, $A_3$ indicates a linkage index, $c_3$ indicates a weight of the linkage index $A_3$, R indicates the number of devices, $c_4$ indicates a weight of the number R of devices, $\sum_{k=1}^{4}c_k=1$, and k = 1, 2, 3, 4.

7. The method according to any one of claims 1 to 6, **characterized in that** the method further comprises the step of:

displaying (206) the safety index, the activity index, the linkage index, and the smart indicator.

8. An apparatus for calculating a smart indicator, **characterized in that** the apparatus comprises:

an acquiring module (401, 501), configured to acquire association information of smart indices; the association information comprising: usage information of a safety device, login information of a smart home APP, configuration information of a smart scenario, and the number of devices;
a first calculating module (402, 502), configured to calculate smart indices respectively according to the association information of smart indices acquired by the acquiring module (401, 501); the smart indices comprising: a safety index, an activity index, and a linkage index; and
a second calculating module (403, 503), configured to obtain the smart indicator by a weight calculation according to the smart indices calculated by the first calculating module (402, 502) and the number of devices.

9. The apparatus according to claim 8, **characterized in that** the acquiring module (401, 501) is configured to acquire the total number n of types of safety devices corresponding to a safety index $A_1$, and the number $N_i$ of safety devices of a corresponding type i; and
the first calculating module (402, 502) is configured to obtain the safety index $A_1$ n according to a formula

$$A_1=\sum_{i=1}^{n}a_i*\log(N_i+1);$$ wherein, $A_1$ indicates a safety index, n indicates the total number of types of the safety devices, i indicates the safety devices of the type i, $a_i$ indicates a weight of the safety devices of the type i,

$$\sum_{i=1}^{n}a_i=100,$$ and $N_i$ indicates the number of safety devices of the type i.

10. The apparatus according to any one of claims 8-9, **characterized in that** the acquiring module (401, 501) is configured to acquire an activity cycle T corresponding to an activity index $A_2$, and login times $M_j$ of a user on the j$^{th}$ day within the activity cycle T, and calculate a difference $Q_j$ of days between the j$^{th}$ day and a current date; and
the first calculating module (402, 502) is configured to obtain the activity index $A_2$ according to a formula

$$A_2=\sum_{j=1}^{T}\log(M_j+1)*(T-Q_j);$$ wherein, $A_2$ indicates an activity index, T indicates an activity cycle, $M_j$ indi-

cates login times of a user on the j$^{th}$ day within the activity cycle T, j indicates the j$^{th}$ day within the activity cycle T, and $Q_j$ indicates a difference of days between the j$^{th}$ day and a current date within the activity cycle T.

11. The apparatus according to claim any one of 8-10, **characterized in that** the acquiring module (401, 501) is configured to acquire the number L of smart scenarios corresponding to a linkage index $A_3$; and
the first calculating module (402, 502) is configured to obtain the linkage index $A_3$ according to a formula $A_3=b*log(L+1)$; wherein, $A_3$ indicates a linkage index, b indicates a weight of a smart scenario, and L indicates the number of smart scenarios.

12. The apparatus according to any one of claim 8-11, **characterized in that** the second calculating module (403, 503) is configured to obtain the smart indicator according to a formula $s=c_1A_1+c_2A_2+c_3A_3+c_4\log(R+1)$; wherein in the formula, S indicates a smart indicator, $A_1$ indicates a safety index, $c_1$ indicates a weight of the safety index $A_1$, $A_2$ indicates an activity index, $c_2$ indicates a weight of the activity index $A_2$, $A_3$ indicates a linkage index, $c_3$ indicates a weight of the linkage index $A_3$, R indicates the number of devices, $c_4$ indicates a weight of the number R of devices,

$$\sum_{k=1}^{4} c_k = 1,$$ and k = 1, 2, 3, 4.

13. An apparatus for calculating a smart indicator, **characterized by** comprising:

> a processor; and
> a memory for storing instructions executable by the processor;

wherein the processor is configured to:

> acquire association information of smart indices;
> calculate corresponding smart indices respectively according to the acquired association information of the smart indices; and
> obtain the smart indicator by a weight calculation according to the smart indices and the number of devices.

14. A computer program including instructions for executing the steps of a method for calculating a smart indicator according to any one of claims 1 to 7 when said program is executed by a computer.

15. A recording medium readable by a computer and having recorded thereon a computer program including instructions for executing the steps of a method for calculating a smart indicator according to any one of claims 1 to 7.

| Acquire association information of smart indices | 101 |

↓

| Calculate corresponding smart indices respectively according to the acquired association information of the smart indices | 102 |

↓

| Obtain the smart indicator by a weight calculation according to the smart indices and the number of devices | 103 |

**FIG.1**

Acquire usage information of a safety device corresponding to the safety index, login information of a smart home APP corresponding to the activity index, and configuration information of a smart scenario corresponding to the linkage index — 201

Calculate a safety index according to the usage information of a safety device — 202

Calculate an activity index according to the login information of a smart home APP — 203

Calculate a linkage index according to the configuration information of a smart scenario — 204

Obtain the smart indicator by a weight calculation according to the smart indices and the number of devices — 205

Display the safety index, the activity index, the linkage index, and the smart indicator — 206

**FIG.2**

Smart indicator

71

Your smart indicator is 71.
You have defeated 97% of
opponents in the whole country

Safety index: 50
Activity index: 70
Linkage index: 95

FIG.3

```
┌─────────────────────┐
│     Acquiring       │──── 401
└─────────────────────┘
           │
           ▼
┌─────────────────────┐
│  First Calculating  │──── 402
└─────────────────────┘
           │
           ▼
┌─────────────────────┐
│ Second Calculating  │
└─────────────────────┘──── 403
```

## FIG.4

```
┌─────────────────────┐
│     Acquiring       │──── 501
└─────────────────────┘
           │
           ▼
┌─────────────────────┐
│  First Calculating  │──── 502
└─────────────────────┘
           │
           ▼
┌─────────────────────┐
│ Second Calculating  │──── 503
└─────────────────────┘
           │
           ▼
┌─────────────────────┐
│      Display        │──── 504
└─────────────────────┘
```

## FIG.5

<u>600</u>

| Memory |
| 604 |

Processing Component

| Communication Component |
| 616 |

| Power Component |
| 606 |

Processor
620

| Multimedia Component |
| 608 |

| Sensor Component |
| 614 |

| Audio Component |
| 610 |

602

I/O Interface
612

**FIG.6**

Europäisches
Patentamt

European
Patent Office

Office européen
des brevets

# EUROPEAN SEARCH REPORT

Application Number

EP 15 17 6088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/008252 A2 (SHETTY RAVINDRA K [IN]; MUNIRAJU AMAR [IN]) 17 January 2013 (2013-01-17) * the whole document * ----- | 1-15 | INV. G06Q10/06 |
| X | CN 203 745 868 U (QINGDAO GAOXIAO INFORMATION IND CO LTD) 30 July 2014 (2014-07-30) * the whole document * ----- | 1-15 | |
| X | JP 2013 097492 A (HOCHIKI CO) 20 May 2013 (2013-05-20) * the whole document * ----- | 1-15 | |

TECHNICAL FIELDS
SEARCHED (IPC)

G06Q

The present search report has been drawn up for all claims

| Place of search | Date of completion of the search | Examiner |
|---|---|---|
| Munich | 1 October 2015 | Breidenich, Markus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 17 6088

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2015

| Patent document cited in search report | | | Publication date | Patent family member(s) | Publication date |
|---|---|---|---|---|---|
| WO 2013008252 | A2 | | 17-01-2013 | NONE | |
| CN 203745868 | U | | 30-07-2014 | NONE | |
| JP 2013097492 | A | | 20-05-2013 | NONE | |

EPO FORM P0459

For more details about this annex : see Official Journal of the European Patent Office, No. 12/82